# EUROPEAN PATENT SPECIFICATION

(11) **EP 1 534 076 B1**
(45) Date of publication and mention of the grant of the patent: **22.08.2007**
(21) Application number: 03794029.3
(22) Date of filing: 01.09.2003
(51) Int. Cl.: A01N 65/00

(54) **FUNGICIDE COMPOSITION CONTAINING TEA TREE OIL**
TEEBAUMÖL ENTHALTENDE FUNGIZIDE ZUSAMMENSETZUNG
COMPOSITION FONGICIDE CONTENANT DE L'HUILE DE THEIER

(30) Priority: 04.09.2002 IL 15159402
(43) Date of publication of application: 01.06.2005
(73) Proprietor: Biomor Israel Ltd, 12900 Katzrin (IL)
(72) Inventor: PIPKO, Gregory, 12900 Katzrin (IL); NEIFELD, Dani, 12944 (IL); REUVENI, Moshe, 12900 Katzrin (IL)
(74) Representative: Kroher, Jürgen
(86) International application number: PCT/IL2003/000717
(87) International publication number: WO 2004/021792

(56) References cited:
- WO-A-02/21926
- US-A- 5 449 517
- PATENT ABSTRACTS OF JAPAN vol. 016, no. 213 (C-0942), 20 May 1992 (1992-05-20) & JP 04 041407 A (HIROYUKI KOIKE;OTHERS: 01), 12 February 1992 (1992-02-12)
- PATENT ABSTRACTS OF JAPAN vol. 014, no. 390 (C-0751), 23 August 1990 (1990-08-23) & JP 02 145502 A (UBE IND LTD), 5 June 1990 (1990-06-05)
- DATABASE CA [Online] CHEMICAL ABSTRACTS SERVICE, COLUMBUS, OHIO, US; MARKHAM, JULIE L.: "Biological activity of tea tree oil" retrieved from STN Database accession no. 131:120639 XP002263358 & MEDICINAL AND AROMATIC PLANTS--INDUSTRIAL PROFILES (1999), 9(TEA TREE), 169-190 ,

## Description

### FIELD OF THE INVENTTON

The present invention generally relates to a fungicide composition containing tea tree oil (hereinafter TTO) and more specifically to an essential oil emulsion obtained from the tea tree, especially adapted for the control of a wide range of fungal plant pathogens.

### BACKGROUND OF THE INVENTION

Increasing intensive agriculture favors the epidemic development of many new and previously unknown plant pests. This development has in turn necessarily led to the use of increasing dosages of chemicals, which negatively affects environmental health. On the other hand, registered pesticides are not always available to control pests effectively and reliable Therefore, health and environmental considerations dictate the need for alternative methods of pest control, which can be promoted as possible strategies for inclusion in an Integrated Pest Management program. This program is a combination of crop protection practice, designed to maintain pests below a designated economic threshold; these practices fall into the categories of chemical; cultural and host-plant resistance.

The control and treatment of plant diseases in green houses and field-grown horticultural corps is a serious problem in agriculture. So far powdering or spraying compositions of mineral source, e.g., sulfur, cuprous hydroxide, calcium polysulfate etc. or compositions based on detergents or oils have been mainly used. However, the use of said compositions is very unsatisfactory as they have many drawbacks.

It has been shown that tea tree oil inhibits certain fungi (See for example Australian Journal of Experimental Agriculture 39:1, 86 -81, 1999). The treatment was satisfactory as it killed the fungi to a large extent, and mainly fungi that attack humans, while in plants it caused phytotoxicity to the attacked plants.

It was thus desirable to develop a composition adapted to the treatment of a wide range of fungal plant pathogens, e.g., which would not use any of the above known compositions, e.g., mineral oils, detergents and/or fats. However, it may comprise tea tree oil as one of its components. It should be convenient to use and be stable.

### SUMMARY OF THE INVENTION

It is thus the core of the invention to provide a cost effective fungicidal emulsion comprising tea tree oil and an aqueous emulsion, wherein the emulsifier is an aqueous solution of a reaction product of a high molecular weight organic fatty acid and an alkali or ammonium compound as set forth in claim 1. Preferably, the emulsion additionally comprises an essential oil. This etheric oil may be selected among lavender oil, pine oil, manuka oil, kanuca oil, eucalyptus oil, bergamot oil, clove oil, lemon oil, lemon grass oil, rosemary oil, geranium oil.

It is in the scope of the present invention wherein the concentration of the tea tree oil is between 0.01% and 10%, and preferably between 0.1% to 1.5%. It is also in the scope of the present invention wherein the concentration of the tea tree oil is between 0.1% to 1.5%, wherein the concentration of the product is 0.1% to 1% and further wherein the remainder being water.

In the present invention, the alkali and ammonium compounds are selected from sodium, potassium and/or ammonium hydroxides, carbonates, bicarbonates or any mixture thereof Preferably, the concentration of the additional etheric oils is between 0.01% and 5%.

It is still in the scope of the present invention that the acid is selected from; (a) tall oil acids, naphthenic acids, rosin acids and any mixture thereof; (b) saturated fatty acid selected from lauric acid, myristic acid, palmitic acid, stearic acid, arachinoic acid, behenic acid, lignoceric acid or any mixture thereof; and, (c) unsaturated fatty acids selected among decenoic acid, dodecenoic acid, palmitinoleic acid, oleic acid, linolenic acid, undecidenic acid, sorbic acid, riconoleic acid or any mixture thereof.

### DETAILED DESCRIPTION OF THE INVENTION

The following description is provided, alongside all chapters of the present invention, so as to enable any person skilled in the art to make use of said invention and sets forth the best modes contemplated by the inventor of carrying out this invention. Various modifications, however, will remain apparent to those skilled in the art, since the generic principles of the present invention have been defined specifically to provide fungicide compositions containing tea tree oil (hereinafter 'fungicide composition'), and more specifically to provide an effective emulsion containing etheric components obtained from the tea tree, especially adapted for the control of a wide range of fungal plant pathogens.

This fungicide composition is a fungicidal emulsion comprising tea tree oil and an aqueous emulsion; wherein the emulsifier is an aqueous solution of a reaction product of a high molecular weight organic fatty acid and an alkali or ammonium compound.

The term 'tea tree' (i.e., TT) is referring hereinafter to *Melaleuca alternifolia* known by the common name "tea tree." More generally, the term is referring to any of the laurel tree family, an unusual variety indigenous to the east coast of New South Wales, Australia.

The term 'tea tree oil' (i.e., TTO) is generally referring hereinafter to any water miscible and water immiscible ingredient of the TT. More specifically, the term TTO is referring to terpinen-4-ol type oils consisting chiefly of terpinenes, cymenes, pinenes, terpineols, cineole, sesquiterpenes, and sesquiterpene alcohols. The term TTO is also referring to any naturally obtained or chemically synthesized or purified composition comprising terpinen-4-ol oils, 29-45%; γ-terpinene, 10-28%, α-terpinene, 2.7-13%; 1,8,-cineole, 4.5-16.5%, and various terpenes, 1-5% selected yet not limited to α-pinene, limonene, p-cymene and terpinolene.

The term `emulsion' is referring hereinafter to any water in oil (W/O); oil in water (O/W); W/O/W and/or O/W/O phases comprising the TTO inside, outside or at the surface of aggregates, vesicles, micelles, reversed micelles, nano-emulsions, microemulsions liposomes or in any combination thereof

The term 'emulsifier' is referring hereinafter to any material or molecule provided as a polymer, oligomer or monomer and is a nonionic, anionic or cationic detergent and/or surfactant. The emulsifier preferably comprises both lipophilic and hydrophilic portions, such as a saturated or non saturated long chain alkyl comprising at least one polar or charged atom.

The terms 'water' and/or 'aqueous solution' are specifically referring hereinafter to water or aqueous solutions, and more generally to any natural or purified, distilled, filtered, deionized waters, water suspensions, water-miscible solvents or diluents, water miscible aqueous phase or water-miscible emulsion or any combination thereof

This fungicide composition consists in a fungicidal emulsion comprising TTO and an aqueous emulsion in which the emulsifier is an aqueous solution of a reaction product of a high molecular weight organic fatty acid and an alkali or ammonium compound.

It is one embodiment of the present invention wherein the aforementioned fungicide composition additionally comprising essential oils, selected from the group of lavender oil, pine oil, manuka oil, kanuca oil, eucalyptus oil, bergamotte oil, clove oil or limonene oil.

In another embodiment of the present invention wherein the aforementioned high molecular weight fatty acid, fatty acids or a mixture of said acids is saturated, unsaturated or comprising a combination of the two, one or all referred hereto in the short term 'high molecular weight fatty acid'.

In another embodiment of the present invention wherein the aforementioned high molecular weight fatty acid comprises linear or branched alkyl chains of C > 12 atoms per molecule. In the scope of the present invention high weight fatty acids are selected from at least one of the following groups:
a. tall oil acids, naphthenic acids, rosin acid or any combination thereof
b. saturated fatty acids selected from the group of lauric acid, myristic acid, palmitic acid, stearic acid, arachinoic acid, behenic acid, lignocetic acid or any combination thereof;
c. unsaturated fatty acids selected from the group of decenoic acid, dodecenoic acid, palmitinoleic acid, oleic acid, linolenic acid, undecilenic acid, sorbic acid, riconoleic acid or any combination of thereof.

According to yet another embodiment of the present invention, those acids are treated with alkali hydroxides, carbonates, bicarbonates or any combination thereof to obtain a salt. Additionally, the hereto-defined acids are admixed with sodium, potassium or ammonium compounds, e.g., hydroxides, carbonates, bicarbonates or any combination thereof to obtain a salt.

According to yet another embodiment of the present invention, the emulsion comprises from 0.01% to 10%, preferably from 0.1% to 1.5% TTO and from 0.02% to 10%, preferably between 0.1% and 1% of the aforementioned salt, wherein the remainder being water as defined above.

According to yet another embodiment of the present invention, the emulsion additionally comprises an essential oil. The concentration of said essential oil is between. 0.01% and 5%, preferably 1% and 5%.

According to yet another embodiment of the present invention, the emulsion is prepared by admixing an aqueous solution comprising alkali hydroxide, carbonate or bicarbonate with a liquid solution of organic acid; subsequently admixing a TTO or a TTO-etheric acid mixture. Said admixing step is provided in a manner that a homogeneous composition is obtained.

Freshly prepared salts solution in water give good emulsification of TTO in a wide concentration range. However, it is possible to use industrially prepared alkali salts of organic acid in powder or in granulated form to dissolve the salt obtained in hot water and to use the received solutions for the emulsification of the TTO.

The TTO containing fungicide composition and especially the fungicide compositions obtained by means of the aforementioned method are characterized by fungicidal activity and by significant plants, crops and soil diseases such as those described in table 2:

**Table 1 A list of crops pathogens affectively treated by means of the TTO containing fungicide composition according to the present invention.**

| **Pathogen** | **Disease** | **Corp** |
|---|---|---|
| *Oomycetes* | Downy mildews and Late blight | Grape, cucurbits, tomato, potato |
| *Phytopthora infestans* | Late blight | Tomato, potato |
| *Plasmopara viticula* | Downy mildews | Grape |
| *Pseudoperonospora cubensis* | Downy mildews | Cucurbits |
| *Ascomycetes* | Powdery mildews | Grape, cucurbits, tomato, pepper |
| *Uncinula necator* | | |
| *Spaerotheca fuliginea* | Powdery mildews | |
| *Levillula taurica* | | |
| *Basidiomycetes* | Rust diseases | Roses |
| *Tranzschelia discolor* | Rust | Prunes, plums, peaches |
| *Fungi imperfecti* | Alternaria | Various crops |
| *Alternaria solani* | Early blight | Tomato, potato |
| *Alternaria alternata* | Leaf and fruit decays | Various crops |
| | and spots | |
| *Aspergillus niger* | Decays and spots | Various crops |
| *Cladosporium spp.* | Leaf spots, decays | Various crops, e.g., tomato and apple |
| *Penicillium spp.* | Decays | Various crops, e.g., citrus |
| *Penicillium italicum* | Decays | |
| *Penicillium digitatum* | Decays | |
| *Botrytis cinerea* | Fruit rots and decays | Various crops, e.g., vegetables flowers, grapes. |
| *Stemphillium spp.* | Leaf spots | Various crops |
| *Trichoderma* | | Various crops |
| *Fusarium* | Decays, rots | Various crops |
| *Rhizoctonia spp.* | Decays, rots | Various crops |
| *Helmintho sporium spp.* | Decays, rots | Potato |

The TTO containing fungicidal composition according to the present invention is useful for treating the pathogens located in flowers, fruits, leaves, roots, tubers, or bulbs.

In order to understand the invention and to see how it may be implemented in practice, a plurality of preferred embodiments will now be described, with reference to the following examples, wherein all percentages are denoted for weight percents.

### Example 1

300 g of naphthenic acid are mixed with 160 g of 1 25% solution of NaOH in water for 60 minutes at 70°C. 316 g TTO is admixed to the reaction product obtained by continuous stirring until full homogenization is obtained. From the composition obtained, which contains 50% TTO, a stable TTO O/W emulsion is prepared by continuously admixing water and oil to obtain an emulsion comprising from 0.001% to 49.9% of oil.

### Example 2

Into a 25% aqueous solution of 300 g KHCO₃, some 400 g of melted stearic acid is admixed at 75°C for 30 min. Subsequently; a mixture of 500 g of TTO and 200 g of lavender oil is admixed to the alkali admixture until full homogenization is obtained. From the composition obtained, a stable TTO O/W emulsion comprising from 0.001% to 49.9% of essential oil is obtained.

### Example 3

30 g of Na₂CO₃ were dissolved in 100 g of water at 50°C for 30 min. This solution was admixed with 120 g of tall oil acid, comprising 25% of rosin acid for additional 30 min. The obtained mixture was dissolved in 500 g of TTO until a homogenized solution was obtained. A plurality of stable TTO-containing emulsions were subsequently obtained.

### Example 4

280 g of oleic acid was admixed with 85 g of a 20% ammonia solution at 60°C. 400 g of TTO was admixed until a homogenized solution was obtained.

### Example 5

30 g of Na₂CO₃ were dissolved in 100 g of water at 50°C for 30 min. This solution was admixed with 120 g of tall oil acid, comprising 25% of rosin acid, for an additional 30 min. The obtained mixture was dissolved in 250 g of TTO and 250g of pine oil until a homogenized solution was obtained. A plurality of stable TTO-containing emulsions was subsequently obtained.

### Example 6

The stable TTO-containing emulsions obtained in examples 1-5 proved useful for treating the corps against pathogens selected from *Oomycetes; Phytopthora infestans; Plasmopara viticula; Pseudoperonospora cubensis; Ascomycetes; Uncinula necator; Spaerotheca fuliginea; Levillula taurica; Basidiomycetes; Tranzschelia discolor; Fungi imperfecti; Alternaria solani; Alternaria alternata; Aspergillus niger; Cladosporium spp.; Pencillium spp. ; Penicillium italicum; Penicillium digitatum; Botrytis cinerea; Stemphillium spp. ; Trichoderma; Fusarium; Rhizoctonia spp.,* and *Helmintho sponium spp.*

The stable TTO-containing emulsions obtained in examples 1-5 proved useful for *in vitro* inhibiting spore germination and/or mycelia growth of the fungi. More specifically, the fungicide composition proved useful prophylactic and local activity in intact plants and detached leaves. Foliar applications of the TTO compositions to field-grown grapevines and melons inhibit downy and powdery mildews development, respectively. The inhibitory effectiveness of TTO compositions makes it well suited for integration into control programs targeted against various diseases in agricultural organic-grown corps and as a replacement of sulfur and/or copper containing pesticides.

The experiments were performed by one of the following methods:

### Spore germination test of downy mildews late blight, Alternaria and rust pathogens

Sporangial suspensions were mixed with various concentrations of TTO, which ranged from 0 to about 1%, and 0.1 mL droplets were transferred to depression glass slides (4 slides per each concentration). Slides were incubated in moist Petri dishes at 20°C in darkness for about 8 hours. The percentage of sporangia releasing zoospores and of zoospores producing germ tubes were counted under the microscope.

### Effect of germination of conidia of powdery mildews pathogens

TTO was dissolved and admixed with sterile distilled water to give a stock solution of a known concentration. TTO was admixed with pre-autoclaved 1% water agar to give final concentrations of 0%, 0.001%, 0.01%, 0.1% and 1%. Conidia were shaken onto glass slides previously coated with water agar containing TTO. Slides were placed in Petri dishes containing wet filter paper and kept in the dark at 20°C for about 16 hours. The number of germinated conidia was counted under a microscope.

### In vitro activity of mycelia growth of fungi

3 mm diameter agar disks bearing the tested fungus were taken from a freshly growing colony on potato dextrose agar, 39 g of Difco in 1 liter of distilled water, and placed on freshly amended agar plates with various concentrations of TTO in 9 cm diameter Petri dishes. Plates were incubated at 25°C for about 6 days in the dark, and the colony diameter was recorded every two days. Three Petri dishes, each containing three inoculum disks, were used for each treatment concentration. Experiments were carried out in duplicates

### In vivo (in planta) experiments

Plants were sprayed with TTO at various concentration ranges from 0 to 2% on both surfaces, and 24 hours later were inoculated on the lower surface with a sporangial suspension of *Plasmopara viticula* (grape downy mildew). The lower surface of each of six to eight attached leaves on each of six plants of each treatment was uniformly sprayed with 2 mL of a sporangial suspension of 4x10⁴ sporangia per mL, delivered from a glass chromatography sprayer. After inoculation, plants were covered with plastic cages, lightly sprayed on the inside with water, and were incubated at 19°C for about 20 hours in darkness. The plants were then uncovered and kept in a growth chamber for disease development. 9 days after inoculation, disease developed on each leaf of the treated plants was evaluated. In some cases, plants were lightly sprayed with water, covered with plastic bags and incubated at 19°C for 24 hours in darkness, to induce sporulation to determine sporangial production. Leaves are bleached and the percent leaf area covered with sporangiophores and sporangia of *P. viticula* were visually estimated and recorded. The number of sporangia produced per square centimeter of leaf tissue was calculated as described above for leaf disks.

### Powdery mildew inoculations

Conidia were shaken onto leaves previously treated with TTO or with water. Plants were incubated in growth-room and percentage of leaf area covered with powdery, mildew was assessed.

Experiments were also performed to evaluate the biological activity of the compositions according to the present invention against fungal pathogens. The experiments were performed with the emulsion of the following composition: oleic acid, 150g; sodium hydroxide, 20g; TTO, 270 g, and water, 100 mL.

### Example 7

The controlling effect of the TTO-containing emulsion on powdery mildew caused by *Spaerotheca fuliginea* in field-grown melon plants was studied:

**Table 2 The inhibition of infected leaf area as to a control as function of treatment by TTO-containing emulsions. Analysis was studied at the upper side of the leaf.**

| Treatment and Concentration (%) | % Inhibition of infected least area as to a control |
|---|---|
| Control | - |
| 0.25 | 50.0 |
| 0.50 | 75.5 |
| 1.00 | 84.5 |

### Example 8

The effect of TTO-containing emulsions on the *in vivo* germination of grape powdery mildew pathogens was studied:

**Table 3 The inhibition of conidial germination as a function of TTO concentration:**

| Treatment and Concentration (%) | % Inhibition of conidial germination |
|---|---|
| Control | - |
| 0.1 | 100 |
| 0.01 | 96 |
| 0.001 | 63 |

### Example 9

The effect of TTO-containing emulsions on grape downy mildew was studied:

**Table 4 The inhibition of infected leaf area as a function of TTO concentration:**

| Treatment and Concentration (%) | % Inhibition of infected leaf area |
|---|---|
| Control | - |
| 1.0 | 100 |
| 0.5 | 100 |
| 0.25 | 99 |

### Example 10

The effect of TTO-containing emulsions on mycelia growth of *Alternaria alternaria* was studied:

**Table 5 The inhibition of A. alternaria as a function of TTO concentration:**

| Treatment and Concentration (%) | % Inhibition of infected leaf area |
|---|---|
| Control | - |
| 0.5 | 100 |
| 0.25 | 68 |
| 0.10 | 30 |

It is acknowledged in this respect that TTO-containing compositions are useful fungicides. It controls *S. fuliginea* in field-grown melon plants, inhibits germination of the grape powder mildew fungus *U. necator* in which a concentration of 0.1% completely inhibits germination at concentrations between 0.01% and 0.001% it provided 96% and 63 % inhibition, respectively. It was also proven effective in controlling foliar disease on leaves of potted plants, for example by spraying of 0.25% of TTO, a complete inhibition of grape downy mildew was obtained. Lastly, it was also proven effective in inhibiting mycelial growth of various fungi.

## Claims

1. A fungicidal emulsion comprising tea tree oil and an aqueous emulsion, wherein the emulsifier is an aqueous solution of a reaction product of a high molecular weight organic fatty acid and an alkali or ammonium compound, wherein the alkali and ammonium compounds are selected from sodium, potassium and/or ammonium hydroxides, carbonates, bicarbonates or mixture thereof.

2. The emulsion according to claim 1, additionally comprising an essential oil.

3. The emulsion according to claim 2, wherein the additional essential oil is selected from lavender oil, pine oil, manuka oil, kanuca oil, eucalyptus oil, bergamotte oil, clove oil, lemon oil, lemon grass oil, rosemary oil and geranium oil.

4. The emulsion according to any one of claims 1 to 3, wherein the concentration of the tea tree oil is between 0.01 % and 10%.

5. The emulsion according to claim 4, wherein the concentration of the tea tree oil is between 0.1% and 1.5%.

6. The emulsion according to claim 4 or 5, wherein the concentration of the tea tree oil is between 0.1% and 1.5%, the concentration of the product is 0.1% to 1%, and wherein the remainder is water.

7. The emulsion according to any one of Claims 2 to 6, wherein the concentration of the additional essential oils is between 0.01 % and 5%.

8. The emulsion according to any of claims 1 to 7, wherein the organic fatty acid is selected from;
a) tall oil acids, naphthenic acids, rosin acids and a mixture thereof;
b) saturated fatty acid selected from lauric acid, myristic acid, palmitic acid, stearic acid, arachnoic acid, behenic acid, lignoceric acid or a mixture thereof, and,
c) unsaturated fatty acids selected from decenoic acid, dodecenoic acid, palmitinoleic acid, oleic acid, linolenic acid, undecilenic acid, sorbic acid, riconoleic acid or a mixture thereof.

## Patentansprüche

1. Fungizide Emulsion, die Teebaumöl und eine wässrige Emulsion enthält, wobei das Emulgierungsmittel die wasserhaltige Lösung eines Reaktionsprodukts einer hochmolekularen organischen Fettsäure und einer Alkali- oder Ammoniumverbindung ist, wobei die Alkali- und Ammoniumverbindungen aus Natrium-, Kalium- und/oder Ammonium-Hydroxiden, Karbonaten, Bikarbonaten oder einer Mischung davon ausgewählt sind.

2. Emulsion gemäß Anspruch 1, die zusätzlich ätherisches Öl enthält.

3. Emulsion gemäß Anspruch 2, wobei das zusätzliche ätherische Öl je nach Wahl ein Lavendelöl, Kiefernöl, Manukaöl, Kanukaöl, Eukalyptusöl, Bergamottenöl, Gewürznelkenöl, Zitronenöl, Zitronengrasöl, Rosmarinöl und Geranienöl ist.

4. Emulsion gemäß einem der Ansprüche 1 bis 3, wobei die Konzentration des Teebaumöls zwischen 0.01 % und 10% beträgt.

5. Emulsion gemäß Anspruch 4, wobei die Konzentration des Teebaumöls zwischen 0.1 % und 1.5% beträgt.

6. Emulsion gemäß Anspruch 4 oder 5, wobei die Konzentration des Teebaumöls zwischen 0.1 % und 1.5% beträgt, die Konzentration des Produktes zwischen 0.1% und 1 % beträgt und wobei der Rest Wasser ist.

7. Emulsion gemäß einem der Ansprüche 2 bis 6, wobei die Konzentration der zusätzlichen ätherischen Öle zwischen 0.01 % und 5% beträgt.

8. Emulsion gemäß einer der Ansprüche 1 bis 7, wobei die organische Fettsäure unter Folgenden ausgewählt wird:
a) Tallölsäuren, Naphthensäuren, Kolophoniumsäuren und einer Mischung davon;
b) gesättigte Fettsäuren ausgewählt aus Laurinsäure, Myristinsäure, Palmitinsäure, Stearinsäure, Arachinsäure, Behensäure, Lignocerinsäure oder einer Mischung davon, und,
c) ungesättigte Fettsäuren ausgwählt aus Decensäure, Dodecensäure, Palmitin-Ölsäure, Ölsäure, Linolensäure, Undezylensäure, Sorbinsäure, Ricinolsäure, oder einer Mischung davon.

## Revendications

1. Emulsion fongicide contenant de l'huile de tea tree avec une solution aqueuse où l'émulsifiant est une solution aqueuse d'un réactif d'un acide gras organique d'un poids moléculaire élevé et un compose alcalin ou d'ammonium, où les composants alcalin ou d'ammonium proviennent des hydroxydes, carbonates, bicarbonates de Sodium, de Potassium et/ou d'ammonium ou une composition entre eux.

2. L'émulsion selon la revendication 1, contenant en outre une huile essentielle.

3. L'émulsion selon la revendication 2, où l'huile essentielle additionelle est choisiée de l'huile essentielle de lavande, de pin, de manuka, de kanuca, d'eucalyptus, de bergamote, de clou de girofle, de citron, de citronnelle, de romarin et du géranium.

4. L'émulsion selon une des revendications 1 à 3, présentant une concentration d'huile de tea tree entre 0.01 % et 10%.

5. L'émulsion selon la revendication 4, présentant une concentration d'huile de tea tree entre 0.1 % et 1.5%.

6. L'émulsion selon la revendications 4 ou 5, où la concentration d'huile de tea tree est de 0.1 % à 1.5%, où la concentration du produit est de 0.1 % à 1 % et où le reste est de l'eau.

7. L'émulsion selon une des revendications 2 à 6, où la concentration d'huiles essentielles supplémentaires est de 0.01% à 5%.

8. L'émulsion selon une des revendications 1 à 7, où l'acide gras organique provient de;
a) les acides d'huile de tall, des acides naphténiques, des acides de rosine et une composition entre eux;
b) l'acide gras saturé peut être l'acide laurique, myristique, palmitique, stéaricacide, l'acide arachénoïque, béhénique, lignocérique, ou une composition entre eux; et,
c) des acides gras non saturés tels que l'acide décénoique, dodécénoïque, palamitinoléïque, oléique, lonoléïque, undécéléniue, sorbique, récinoléique ou une composition entre eux.
